# EUROPEAN PATENT APPLICATION

(11) **EP 2 096 572 A2**
(43) Date of publication of application: **02.09.2009**
(21) Application number: 09250037.0
(22) Date of filing: 08.01.2009
(51) Int. Cl.: G06F 21/20, G06F 21/24

(54) **Information storage system**

(30) Priority: 26.02.2008 JP 2008045005
(71) Applicant: Hitachi Ltd., Chiyoda-ku Tokyo 100-8280 (JP)
(72) Inventor: Asahi, Takeshi, Tokyo 100-8220 (JP); Ebata, Atsushi, Tokyo 100-8220 (JP); Nakano, Takahiro, Tokyo 100-8220 (JP); Iwasaki, Masaaki, Tokyo 100-8220 (JP); Kawaguchi, Atsuo, Tokyo 100-8220 (JP); Iwami, Naoko, Tokyo 100-8220 (JP)
(74) Representative: Moore, Graeme Patrick

(57) **Abstract**

A storage media and a storage area of a storage apparatus are associated, and the storage media is used to manage the contents of the storage apparatus. A storage media for storing files is detachably mounted on an information processing apparatus, the information processing apparatus is connected to a storage apparatus via the Internet, the storage apparatus stores files corresponding to the files stored in the storage media, the storage media and the storage apparatus authenticate each other via the Internet, and the information processing apparatus reads files from or writes files into the storage media or the storage apparatus on the condition that the foregoing authentication is successful.

## Description

This application relates to and claims priority from Japanese Patent Application No. 2008-045005, filed on February 26, 2008, the entire disclosure of which is incorporated herein by reference.
The present invention relates to an information storage system for sending and receiving information between an information processing apparatus including a storage media for storing information, and a storage apparatus for storing information.

Pursuant to the diffusion of personal computers (PC), digital cameras, and digital TVs, occasions of handling digital data are increasing. In addition, pursuant to the higher quality of audio and visual contents, the increase in capacity of content data is advancing. Meanwhile, since the storage capacity that is available in the individual terminals is limited, it is difficult to store a sufficient amount of content data. Nevertheless, by using an online storage that provides storage capacity via a network, a sufficient amount of content data can be stored.

As technology for using such online storage, for instance, a proposal has been made for connecting a terminal of a storage service user to use the data and a storage service provide to provide the storage service via a network, automatically uploading or downloading data between the terminal and the storage service provider so that the unused capacity of the data accumulation unit in the terminal does not fall below a designated value, and constantly providing unused data capacity to the terminal (refer to Japanese Patent Laid-Open Publication No. 2002-328828).

Nevertheless, with the foregoing conventional technology, since the data accumulation unit is integral with the terminal, the data stored in the data accumulation unit cannot be used in other devices. In addition, the upload and download of data between the terminal and the storage service provider must always be performed so that the unused capacity of the data accumulation unit does not fall below the designated value, and it is not possible to arbitrarily manage the contents in the online storage from the terminal side.

Thus, an aim of the present invention is to provide an information storage system that associates a storage media and a storage area of a storage apparatus, and preferably enables the management of the contents in the storage apparatus using the storage media.

In view of the foregoing aim, the present invention preferably mutually associates a storage medium for storing information and a storage area of a storage apparatus for storing information, preferably stores the information stored in the storage media by associating it with the storage apparatus, preferably causes the storage media and the storage apparatus to authenticate each other, and preferably causes the information processing apparatus to send and receive information to and from the storage media and the storage apparatus as the access targets on the condition that the foregoing authentication is successful.

According to the present invention, contents of the storage apparatus can preferably be managed using the storage media.

### DESCRIPTION OF DRAWINGS

Fig. 1 is a configuration diagram of a storage media according to the present invention;

Fig. 2 is a configuration diagram of an information processing apparatus according to the present invention;

Fig. 3 is a configuration diagram of a storage apparatus according to the present invention;

Fig. 4 is a configuration diagram of an information storage system according to the present invention;

Fig. 5A is a diagram showing the data structure of a storage apparatus management table, and Fig. 5B is a diagram showing the data structure of a file management table according to the present invention;

Fig. 6A is a diagram showing the data structure of a storage media management table, and Fig. 6B is a diagram showing the data structure of a file management table according to the present invention;

Fig. 7 is a flowchart of a file reading method according to the present invention;

Fig. 8 is a flowchart of a file writing method according to the present invention;

Fig. 9 is a flowchart of a storage media/storage apparatus registration processing according to the present invention; and

Fig. 10 is a configuration diagram of a storage media according to another embodiment of the present invention.

Embodiments of the present invention are now explained with reference to the attached drawings.

[First Embodiment]

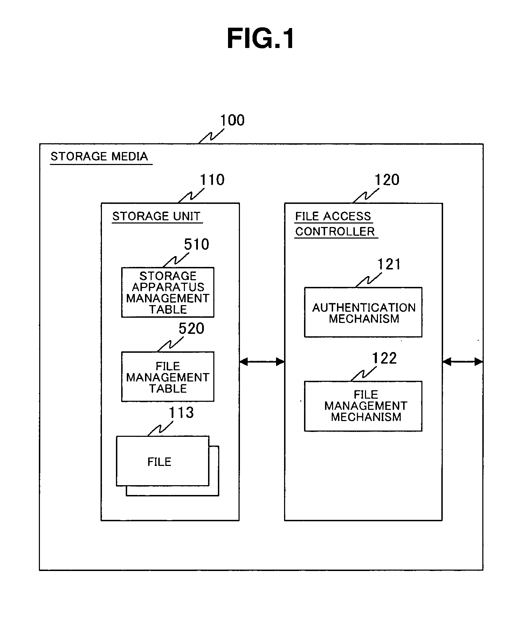

Fig. 1 is a configuration diagram of a storage media according to the present invention. In Fig. 1, the storage media 100 comprises a storage unit 110 storing a storage management table 510 and a file management table 520 and a file 113, and a file access controller 120 for controlling the storage media 100, and is detachably mounted on an information processing apparatus 200.

The storage unit 110 stores a storage apparatus management table 510 for storing information of a related storage apparatus 300, a file management table 520 for storing information of a related file 113, and a file 113.

The file access controller 120 comprises an authentication mechanism 121 for performing two-way authentication with the storage apparatus 300, and a file management mechanism 122 for determining the storage location of the file.

The authentication mechanism 121 performs the two-way authentication using public key infrastructure technology. Thus, it stores a digital certificate of a certificate authority and a digital certificate of the storage media 100 issued by the certificate authority. The authentication mechanism 121 confirms whether the input digital certificate is a legitimate digital certificate that was issued by the certificate authority, and outputs the digital certificate of the storage medial 100 issued by the certificate authority in order to certify the adequacy of the storage media 100. SSL (Secure Socket Layer) is used as the public key infrastructure technology.

Here, the authentication mechanism 121 of the storage media 100 performs two-way authentication with the authentication mechanism 321 of the storage apparatus 300, and secure communication between the storage media 100 and the storage apparatus 300 is enabled based on this two-way authentication. Information of a connectable storage apparatus 300 is stored in the storage apparatus management table 510.

(Copy (Sending) from Storage Media 100 to Storage Apparatus 300)

When communication with the storage apparatus 300 is enabled based on the two-way authentication, the storage media 100 sends the file 113 stored in the storage unit 110 to the storage apparatus 300. Information of the file 113 is stored in the file management table 520. When the sending of the file 113 is complete, a file name stored in the storage apparatus 300 is received from the storage apparatus 300. The file management table 520 stores, in relation to the sent file, "External" as the LOC element, the destination storage apparatus ID as the SID element, and the file name as the FILE element in the file position storage information field 523. The file 113 can be uniquely identified based on the information of the file position storage information field 523.

(Restoration (Reception) from Storage Apparatus 300 to Storage Media 100)

When communication with the storage apparatus 300 is enabled based on the two-way authentication, the storage media 100 requests the sending of a file of a file name of the FILE element to the storage apparatus 300 designated with the SID element based on the SID element and the FILE element of the file storage location information field 523 in the file management table 520, receives the file sent to the storage apparatus 300, and stores such file in the storage unit 110.

(Information Processing Apparatus 200)

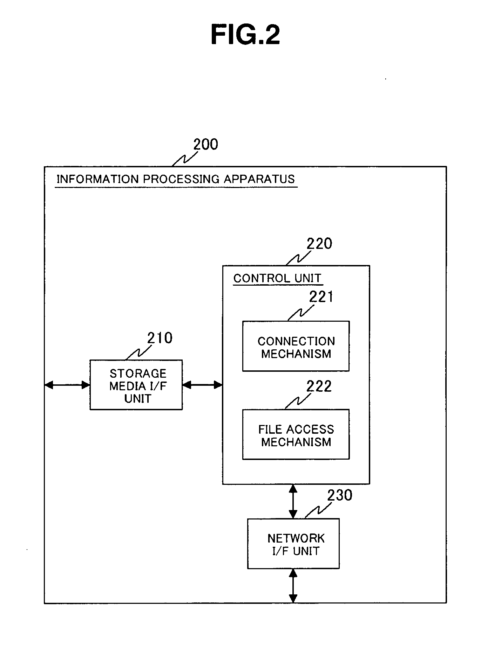

Fig. 2 is a configuration diagram of the information processing apparatus 200 according to the present invention. The configuration of this information processing apparatus 200 is now explained with reference to Fig. 2. The information processing apparatus 200 comprises a storage media I/F unit 210 to be connected to the storage media 100, a control unit 220 for controlling the information processing apparatus 200, and a network I/F unit 230 for connecting to a network 410.

The control unit 220 comprises a connection mechanism 221 to be connected to the storage apparatus via the network 410, and a file access mechanism 222 for reading and writing files from and into the storage media 100.

(Storage Apparatus 300)

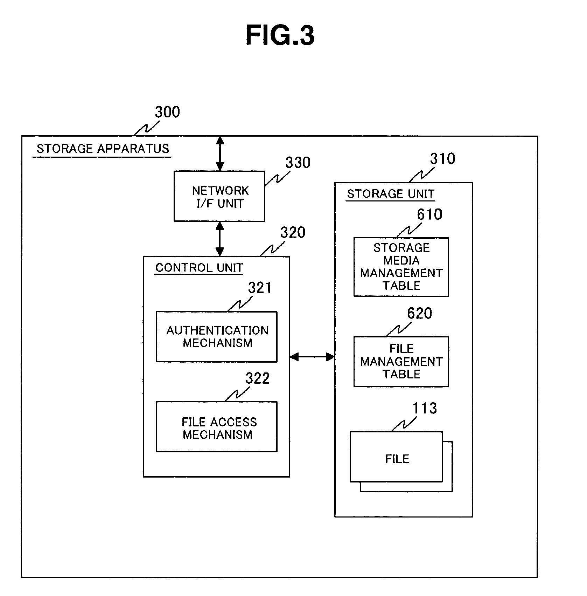

Fig. 3 is a configuration diagram of the storage apparatus according to the present invention. The configuration of this storage apparatus is now explained with reference to Fig. 3. The storage apparatus 300 comprises a network I/F unit 330 to be connected to the network 410, a control unit 320 for controlling the storage apparatus 300, and a storage unit 310 storing a storage media management table 610 and a file management table 620 and a file 113.

The control unit 320 comprises an authentication mechanism 321 for performing two-way authentication with the storage media 100, and a file access mechanism 322 for reading and writing files from and into the storage unit 310.

The storage unit 310 stores a storage media management table 610 storing information of a related storage media 100, a file management table 620 storing information of the stored file 113, and a file 113.

The authentication mechanism 321 performs the two-way authentication using public key infrastructure technology. Thus, it stores a digital certificate of a certificate authority and a digital certificate of the storage apparatus 300 issued by the certificate authority. The authentication mechanism 321 confirms whether the input digital certificate is a legitimate digital certificate that was issued by the certificate authority, and outputs the digital certificate of the storage apparatus 300 issued by the certificate authority in order to certify the adequacy of the storage apparatus 300. SSL (Secure Socket Layer) is used as the public key infrastructure technology.

The authentication mechanism 321 of the storage apparatus 300 performs two-way authentication with the authentication mechanism 121 of the storage media 100, and secure communication between the storage media 100 and the storage apparatus 300 is enabled based on this two-way authentication. Information of a connectable storage media 100 is stored in the storage media management table 610.

(Copy (Reception) from Storage Media 100 to Storage Apparatus 300)

When communication with the storage media 100 is enabled based on the two-way authentication, the storage apparatus 300 receives the file 113 from the storage media 100, gives the file 113 an external file name and stores it in the storage unit 310. The external file name may be any name so long as it is unique in the storage apparatus. The external file name is sent to the storage media 100. In the file management table 620, the external file name is stored in the external file name field 623, and the storage media ID of the storage media 100 is stored in the corresponding storage media ID field 621. The file 113 can be uniquely identified based on the information of the external file name field 623 and the corresponding storage media ID field 621.

(Restoration (Sending) from Storage Apparatus 300 to Storage Media 100)

When communication with the storage media 100 is enabled based on the two-way authentication, the storage apparatus 300 designates a file name from the storage media 100 and receives a file send request, reads the file 113 of that file name from the storage unit 310, and sends it to the storage media 100.

(Information Storage System 400)

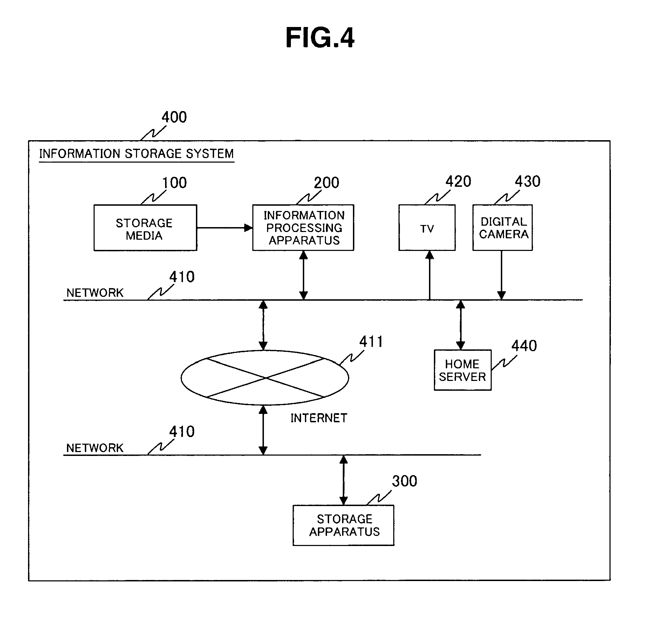

Fig. 4 is a configuration diagram of an information storage system according to the present invention. The configuration of this information storage system is now explained with reference to Fig. 4.

The information storage system 400 comprises a storage media 100 to be connected to an information processing apparatus 200 and for storing a file 113, an information processing apparatus 200 to be connected to the storage media 100 and to be connected to a storage apparatus 300 via a network 410, a storage apparatus 300 to be connected to the information processing apparatus 200 via the networks 410, 411 and for storing a file 113, a network 410 for connecting the information processing apparatus 200 and a TV 420 and a digital camera 430 and the Internet 411, a network 410 for connecting the storage apparatus and the Internet 411, the Internet for connecting the networks 410, a TV 420 for displaying the file 113 of the image to be output by the information processing apparatus 200, and a digital camera 430 for inputting the file 133 of the image into the information processing apparatus 200.

(Two-Way Authentication of Storage Media 100 and Storage Apparatus 300)

In the information storage system 400, the storage media 100 is connected to the information processing apparatus 200, and connected to the storage apparatus 300 via the network 410. Here, the storage media 100 and the storage apparatus 300 execute two-way authentication processing via the information processing apparatus 200 and the network 410.

(Management Data 510, 520 in Storage Media 100)

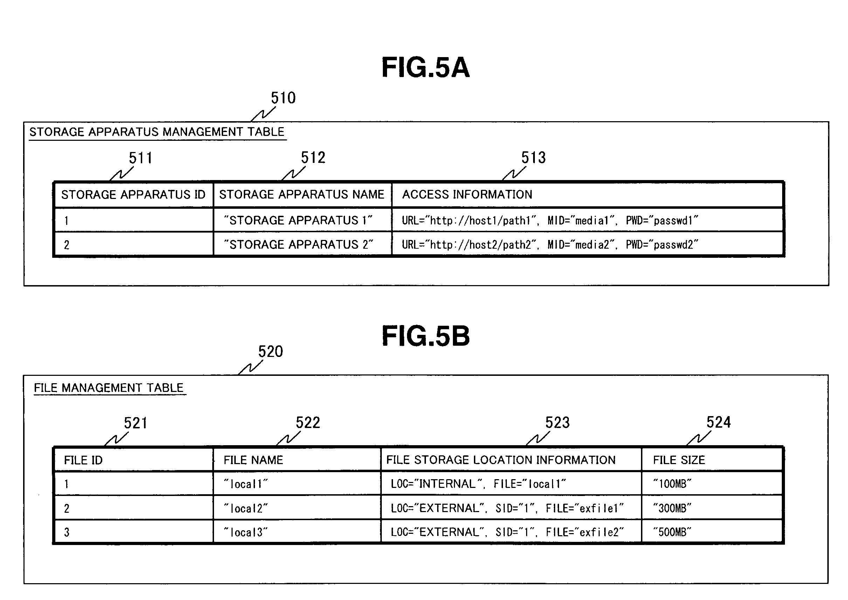

Fig. 5A and Fig. 5B are diagrams showing the data structure of the storage apparatus management table and the file management table according to the present invention. The data structure of the storage apparatus management table and the data structure of the file management table are now explained with reference to Fig. 5.

The storage apparatus management table 510 comprises a storage apparatus ID field 511 for storing at least one piece of information of the storage apparatus 300 storing a file related to the storage media 100 and storing a unique identifier of the storage apparatus 300, a storage apparatus name field 512 for storing the identification name of the storage apparatus 300, and an access information field 513 for storing information in order to access the storage apparatus 300.

The access information field 513 comprises a URL element as an identifier for searching and connecting to the storage apparatus 300 online, a MID element as a unique identifier to be used by the storage apparatus 300 for identifying the storage media 100, and a PWD element as secret information for authorizing access to the storage apparatus 300.

The file management table 520 comprises a file ID field 521 for storing at least one piece of information of the file 113 related to the storage media 100 and storing a unique identifier of the file 113, a file name field 522 for storing the identification name of the file 113, a file storage location information field 523 for storing the storage location of the file, and a file size field 524 for storing the size of the file.

The file storage location information 523 additionally comprises a LOC element as an identifier showing that it is "Internal" when the file is stored within the storage media 100 and "External" when the file is stored outside the storage media 100, a SID element storing a storage apparatus ID 511 showing the unique identifier of the storage apparatus 300 storing the file 113 when the LOC is "External," and a FILE element as the name to be used upon accessing the file 116.

(Management Data 610, 620 in Storage Apparatus 300)

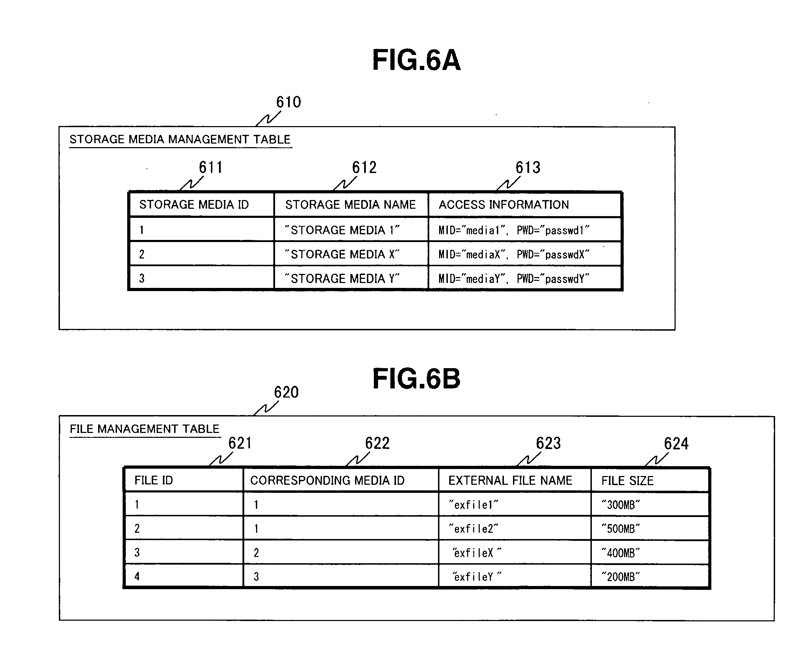

Fig. 6A and Fig. 6B are diagrams showing the data structure of the storage media management table and the file management table of the present invention. The data structure of the storage media management table and the data structure of the file management table are now explained with reference to Fig. 6.

The storage media management table 610 comprises a storage media ID field 611 for storing at least one piece of information of the storage media related to the file 116 stored in the storage apparatus 300 and storing a unique identifier of the storage media 100 related to the file 116, a storage media name field 612 for storing the identification name of the storage media 100 related to the file 116, and an access information field 613 for determining whether the access was made using the media 110 related to the file 116.

The access information field 613 comprises a MID element as a unique identifier for identifying the storage media 100, and a PWD element as secret information for authorizing access to the storage apparatus.

The file management table 620 comprises a file ID field 621 for storing at least one piece of information related to the file 116 stored in the storage apparatus 300 and storing a unique identifier of the file 116, a corresponding storage media ID field 622 for storing a unique identifier of the storage media 100 related to the file 116, an external file name field 623 for storing the identification name of the file 116, and a file size field 624 for storing the size of the file 116.

(File Reading Method)

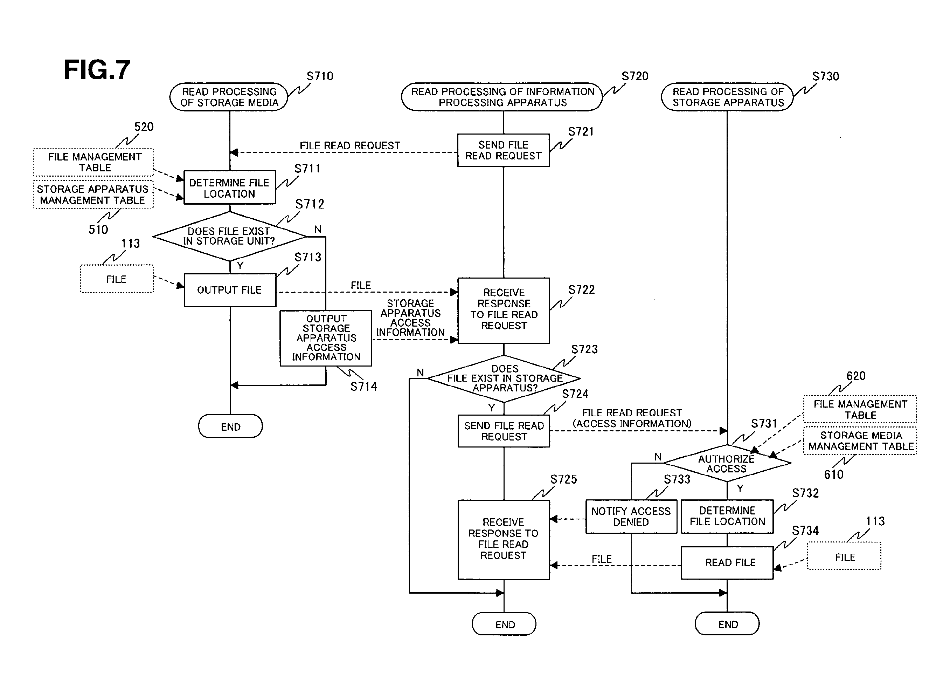

The file reading method of the present invention is now explained with reference to the flowchart of Fig. 7. The read processing (S710) of the storage media 100 is executed by the file access controller 120. The file access controller 120 receives a file read request from the information processing apparatus 200, searches for the file name contained in the file read request from the file name field 522 of the file management table 520, and acquires the file storage location information field 523 (S711).

Subsequently, the file access controller 120 determines whether the file 113 exists in the storage unit 110 based on the LOC element of the file storage location information field 523 (S712), and reads the file 113 from the storage unit 110 if the LOC element is "Internal" since this means that the file 113 exists in the storage unit 110, and outputs this file 113 to the information processing apparatus 200 (S713). Meanwhile, the file access controller 120 searches for the storage ID 511 corresponding to the SID element from the storage apparatus management table 510 if the LOC element is "External" since this means that the file 113 exists in the storage apparatus 300, and outputs the access information field 513 to the information processing apparatus 200 (S714).

The read processing (S720) of the information processing apparatus 200 is executed by the control unit 220. The control unit 220 sends a file read request including the file name of the file 113 to be read into the storage media 100 (S721), and acquires the file or the access information field 513 of the storage 300 from the storage media 100 in response to the file read request (S722).

Here, if the file 113 is received, the control unit 220 ends the processing. If the access information field 513 of the storage 300 is received, the control unit 220 determines that the file 113 exists in the storage 300 (S723), and sends a file read request containing the access information field 513 and the file storage location information field 523 to the storage apparatus 300 (S724). The control unit 200 thereafter receives an access denied notification or the file 113 from the storage apparatus 300 (S725).

The read processing (S730) of the storage 300 is executed by the control unit 320. The control unit 320 receives a file read request containing the access information field 513 and the file storage location information field 523 from the information processing apparatus 200, and compares the PWD element of the received access information field 513 and the PWD element of the access information field 613 in the storage media management table 610 (S731).

The control unit 320 sends an access denied notification to the information processing apparatus 200 if the PWD elements do not coincide (S733), and authorizes access when the PWD elements coincide, and searches for an external file name that coincides with the FILE element of the file storage location information field 523 from the external file name field 623 of the file management table 620 (S732). Here, the control unit 320 reads the file 113 of the external file name from the storage unit 310 and sends it to the information processing apparatus 200 if the corresponding storage media ID 622 and the storage media ID 611 of the storage media 100 that sent the request coincide (S734).

Thereby, the information processing apparatus 200 is able to acquire the file 113 from the storage media 100 if the file 113 exists in the storage media 100, and acquire the file 113 from the storage apparatus 300 if the file 113 does not exist in the storage media 100.

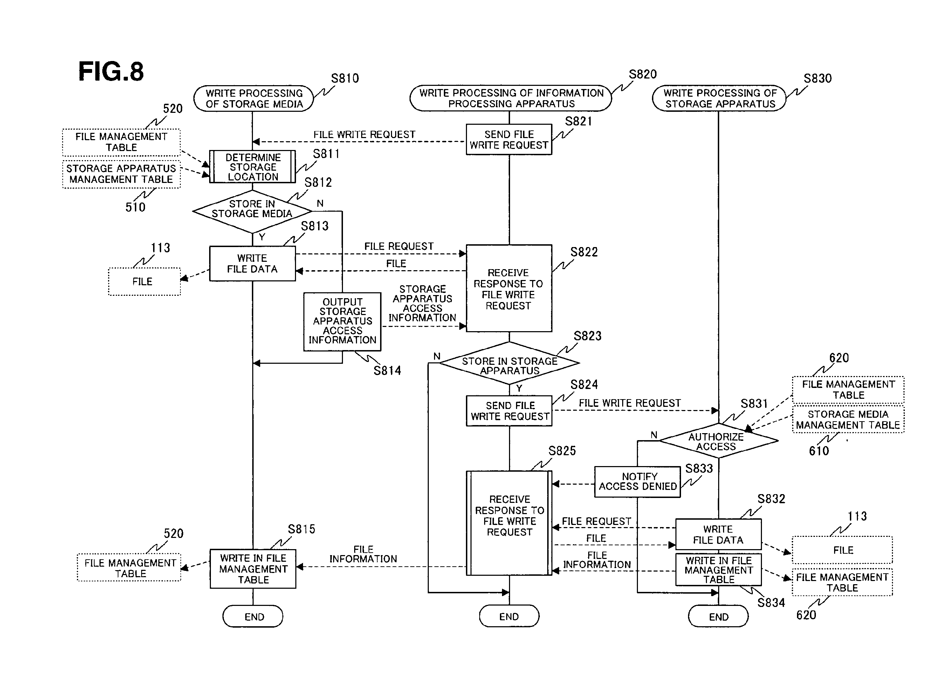

The file writing method of the present invention is now explained with reference to Fig. 8. The write processing (S810) of the storage media 100 is executed by the file access controller 120. The file access controller 120 receives a file write request from the information processing apparatus 200, and determines the storage location of the file based on file information such as the file name and file size contained in the file write request (S811). For example, if the file size is less than half of the unused capacity of the storage unit 110, the file access controller 120 sets the storage media 100 as the storage location of the file, and executes processing for storing the storage apparatus information in all other cases (S812). If the file is to be stored in the storage media 100, the file access controller 120 requests the file 113 to the information processing apparatus 200, acquires the file 113 from the information processing apparatus 200, and stores the file 113 in the storage unit 110 (S813).

Meanwhile, if the file is to be stored in the storage apparatus 300, the file access controller 120 selects the storage 300 for storing the file 113 from the storage apparatus management table 515, and outputs the corresponding access information field 513 to the information processing apparatus 200 (S814).

Subsequently, the file access controller 120 receives the file information received from the information processing apparatus 200 in the file management table 520. Here, the file access controller 120 stores "Internal" in the LOC element and the file name in the FILE element in the file storage location information field 523 if the file 113 is stored in the storage media 100, receives the file information containing the external file name recorded in the storage apparatus 300 from the information processing apparatus 200 if the file 113 is stored in the storage apparatus 300, and stores "External" in the LOC element, the selected storage apparatus ID 511 in the SID element, and the external file name in the FILE element (S815).

The write processing (S820) of the information processing apparatus 200 is executed by the control unit 220. The control unit 220 sends a file write request containing the file name and file size of the file 113 to be written into the storage media 100 (S821), and acquires the file request or the access information field 513 of the storage apparatus 300 from the storage media 100 in response to the file write request. If the control unit 220 acquires the file request, it outputs the file 113 to be written to the storage media 100 (S822), and ends the processing upon outputting the file 113 to be written to the storage media.

Meanwhile, if the control unit 220 acquires the access information field 513 of the storage apparatus 300 from the storage media 100 (S823), it sends the access information field 513 and a file write request containing the file name and file size of the file 113 to be written to the storage apparatus 300 (S824). The control unit 220 thereafter receives an access denied notification or a file request from the storage apparatus 300, and ends the processing upon receiving an access denied notification from the storage apparatus 300.

Meanwhile, if the control unit 220 receives a file request from the storage apparatus 300, it outputs the file 113 to the storage apparatus 300. The control unit 220 thereafter acquires, from the storage apparatus 300, the file information containing the external file name defined uniquely by the storage apparatus 300 for the file 113 output to the storage 300, and inputs the acquired file information in the storage media 100 (S825).

The write processing (S830) of the storage apparatus 300 is executed by the control unit 320. The control unit 320 receives the access information field 113 and a file write request containing the file name and file size of the file 113 to be written from the information processing apparatus 200, compares the PWD element of the received access information field 513 and the PWD element of the access information field 613 in the storage media management table 610 (S831), and sends an access denied notification to the information processing apparatus 200 if the comparative result is not a match (S833).

If the comparative result is a match, the control unit 320 authorizes the access, sends a file request to the information processing apparatus 200, receives the file 113 from the information processing apparatus 200, determines an external file name for the file 113 that can be uniquely identified in the storage apparatus 300, and gives the file 113 an external file name and stores it in the storage unit 310 (S832). Subsequently, the control unit 320 stores information in the corresponding storage media ID field 622 and the external file name field 623 in the file management table 620, and sends the file information containing the external file name to the information processing apparatus 200 (S834).

Thereby, the information processing apparatus 200 stores the file in the storage media 100 or the storage apparatus 300 based on the command from the storage media 100. In addition, the storage media 100 is able to store information of the storage apparatus 300 storing the file 113 related to the storage media 100.

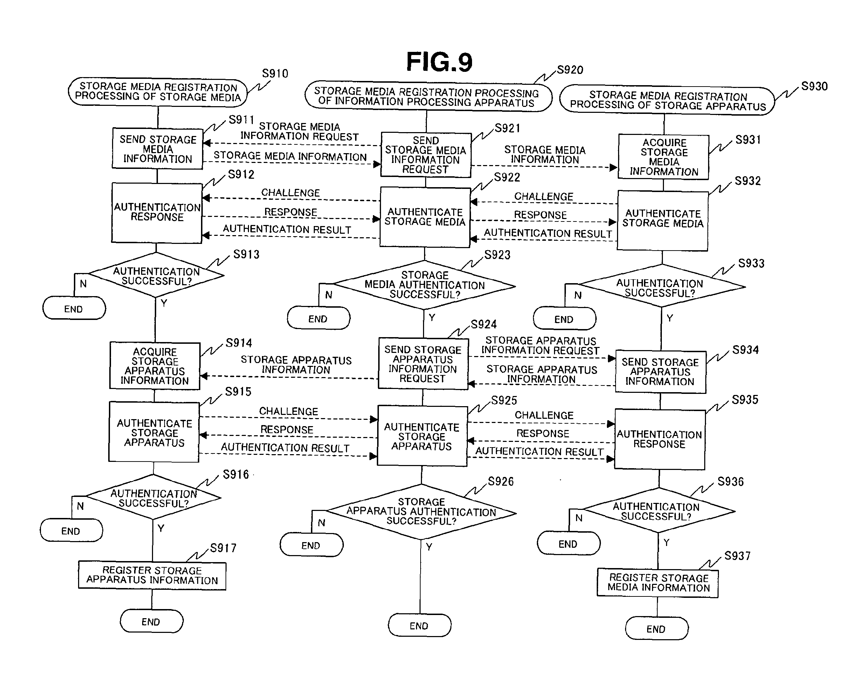

The storage media registration method of the present invention is now explained with reference to the flowchart of Fig. 9. The storage media registration processing (S920) of the information processing apparatus 200 is executed by the control unit 220. The control unit 220 of the information processing apparatus 200 sends a storage media information request to the storage media 100, receives the storage media [information] received by the storage media 100, and sends this storage media information to the storage apparatus 300 (S921).

Subsequently, the control unit 220 relays the information to be used when the storage apparatus 300 authenticates the storage media 100 according to a challenge & response method. In other words, the information processing apparatus 200 receives a challenge from the storage apparatus 300, sends the challenge to the storage media 100, receives a response to the challenge from the storage media 100, sends the response to the storage apparatus 300, receives the authentication result from the storage apparatus 300, and sends the authentication result to the storage media 100 (S922).

Here, the control unit 220 determines the success or failure of authentication of the storage media 100 based on the authentication result (S923), and ends the processing if the authentication is a failure. If the control unit 220 determines that the authentication is successful, the information processing apparatus 200 sends a storage apparatus information request to the storage apparatus 300, receives the storage apparatus information sent from the storage apparatus 300, and sends the storage apparatus information to the storage media 100 (S924).

Subsequently, the information processing apparatus 200 relays the information to be used when the storage media 100 authenticates the storage apparatus 300 according to a challenge & response method. In other words, the information processing apparatus 200 receives a challenge sent from the storage media 100, sends the challenge to the storage apparatus 300, receives a response to the challenge from the storage apparatus 300, sends the response to the storage media 100, receives the authentication result from the storage media 100, and sends the authentication result to the storage apparatus 300 (S925). Here, the information processing apparatus 200 determines the success or failure of authentication of the storage apparatus 300 based on the authentication result (S926), and ends the processing whether the authentication is a failure or is successful.

(Storage Media Registration Processing (Storage Media))

The storage media registration processing (S910) of the storage media 100 is executed by the file access controller 120. The file access controller 120 receives a storage media information request from the information processing apparatus 200, and sends the storage media information to the information processing apparatus 200 (S911). The storage media information contains a public key of the storage media 100.

Subsequently, the file access controller 120 replies to the authentication of the storage media 100 according to a challenge & response method, receives a challenge from the information processing apparatus 200, appends a signature and creates a response by using a secret key corresponding to the public key in response to the challenge, sends the created response to the information processing apparatus 200, and receives the authentication result from the information processing apparatus 200 (S912).

The file access controller 120 thereafter determines the success or failure of authentication of the storage media 100 based on the authentication result (S913), ends the processing if the authentication is a failure, and receives storage apparatus information from the information processing apparatus 200 if the authentication is successful (S914). The storage apparatus information contains a public key of the storage apparatus 300.

Subsequently, the file access controller 120 authenticates the storage apparatus 300 according to a challenge & response method. Here, the file access controller 120 produces a random number as the challenge, sends the challenge to the information processing apparatus 200, receives a response to the challenge from the information processing apparatus 200, decrypts the response with the public key of the storage 300, determines that the authentication result is successful if the decoded value coincides with the challenge and determines that the authentication result is a failure if the decoded value does not coincide with the challenge, and sends the authentication result to the information processing apparatus 200 (S915).

The file access controller 120 thereafter determines the authentication result (S916), ends the processing if the authentication is a failure, and stores the storage apparatus information in the storage apparatus management table 510 (S917) and ends the processing if the authentication is successful.

(Storage Media Registration Processing <Storage Apparatus>)

The storage media registration processing (S930) of the storage apparatus 300 is executed by the control unit 320. The control unit 320 receives storage media information from the information processing apparatus 200 (S931). The storage media information contains a public key of the storage media 100.

Subsequently, the control unit 320 authenticates the storage media 100 according to a challenge & response method. Here, the control unit 320 of the storage apparatus 300 produces a random number as the challenge, sends the challenge to the information processing apparatus 200, receives a response to the challenge from the information processing apparatus 200, decodes the response with the public key of the storage media 100, determines that the authentication result is successful if the decoded value coincided with the challenge and determines that the authentication result is a failure if the decoded value does not coincide with the challenge, and sends the authentication result to the information processing apparatus 200 (S932).

The control unit 320 thereafter determines the authentication result (S933), ends the processing if the authentication is a failure, and receives a storage apparatus information request from the information processing apparatus 200 and sends storage apparatus information to the information processing apparatus 200 if the authentication is successful (S934). The storage apparatus information contains a public key of the storage apparatus 300.

Subsequently, the control unit 320 responds to the authentication of the storage apparatus 300 according to a challenge & response method, receives a challenge from the information processing apparatus 200, appends a signature and creates a response by using a secret key corresponding to the public key in response to the challenge, sends the created response to the information processing apparatus 200, and receives the authentication result from the information processing apparatus 200 (S935). The control unit 220 thereafter determines the success or failure of authentication of the storage apparatus 300 based on the authentication result (S936), ends the processing if the authentication is a failure, and stores the storage media information in the storage media management table 610 (S937) and ends the processing if the authentication is successful.

According to the present embodiment, since the storage media 100 is detachably mounted on the information processing apparatus 200, the information processing apparatus 200 is connected to the storage apparatus via the network 410 and the Internet 411, the storage apparatus 300 stores a file 113 corresponding to the file 113 stored in the storage media 100, the storage media 100 and the storage apparatus 300 authenticate each other via the Internet 411, and the information processing apparatus 200 reads or writes the files 113 from or into the storage media 100 or the storage apparatus 300 on the condition that the authentication is successful, contents of the storage apparatus 300 can be managed using the storage media 100.

In addition, the information processing apparatus 200 of this embodiment is able to read the file 113 stored in the storage apparatus 300 related to the storage media 100 based on another information processing apparatus according to the read processing (S710) of the storage media 100.

Moreover, the storage media 100 is able to output the storage apparatus management table 510 and the file management table 520 to the information processing apparatus 200, and the information processing apparatus 200 is able to store the storage apparatus management table 510 and the file management table 520. Further, the storage media 100 is able to input the storage apparatus management table 510 and the file management table 520 from the information processing apparatus 200.

[Second Embodiment]

In this embodiment, the information processing apparatus 200 executes both the backup and restoration, and the remaining configuration is the same as the first embodiment described above. In other words, when the information processing apparatus 200 is to delete or overwrite a file 113 stored in the storage media 100, it reads such file 113 from the storage media 100, and stores the file 113 in the storage apparatus 300. Here, the storage apparatus 300 stores the file 113 and its file name, and the time that the file 113 was stored. Since the file 13 to be stored is stored under a different name, it will not be overwritten even if it a file 113 with the same name.

When the storage apparatus 300 designates a file name, it outputs a list of the times that the file name was stored. The information processing apparatus 200 designates the file name and the time that the file 113 was stored and reads the file 113 from the storage apparatus 300.

Thereby, the file 113 stored in the storage media 100 will be backed up when it is to be deleted or overwritten, and it will also be possible to read and restore the file 113.

[Third Embodiment]

In this embodiment, advertisement information is stored in the storage apparatus 300 and, upon receiving a file read request from the information processing apparatus 200 and outputting the file 113 to the information processing apparatus 200, the advertisement information is added to the file 113 upon outputting the file 113, and the remaining configuration is the same as the first embodiment described above.

[Fourth Embodiment]

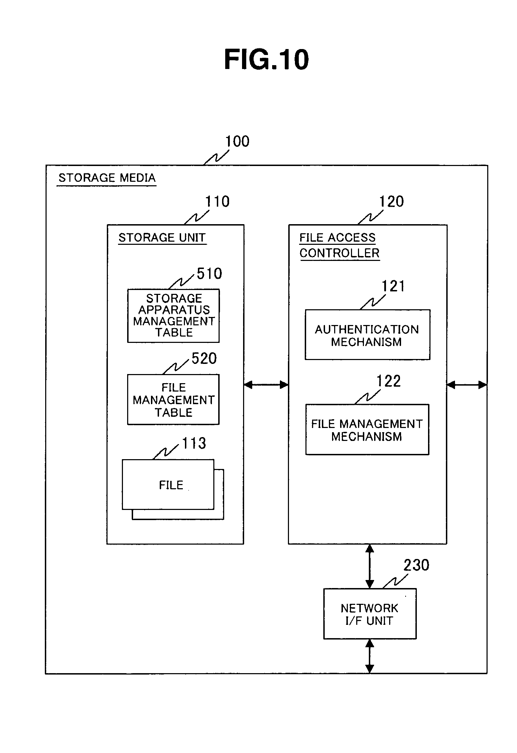

In this embodiment, the storage media 100 is directly connected to the storage apparatus 300 via the network 410, and the remaining configuration is the same as the first embodiment described above. Specifically, as shown in Fig. 10, the storage media 100 is connected to the network 40 and the storage apparatus 300 via the network I/F 230.

When reading files in this embodiment, the read processing (S710) of the storage media 100 and the read processing (S720) of the information processing apparatus 200 are executed by the file access controller 120 of the storage media 100, and the read processing (S730) of the storage apparatus is executed by the storage apparatus 300. In addition, the write processing (S810) of the storage media and the write processing (S820) of the information processing apparatus are executed by the file access controller 120 of the storage media 100, and the write processing (S830) of the storage apparatus is executed by the storage apparatus 300.

According to this embodiment, by adding a communication function to the storage media 100, the files 113 of the storage apparatus 300 can be directly managed from the storage media 100.

[Fifth Embodiment]

In this embodiment, file type information and/or file importance information is given to the file 13, and the remaining configuration is the same as the first embodiment described above. Here, the storage media 100 stores the type of file to be backed up, and backs up the file by outputting the file coinciding with the type of file to the storage apparatus 300. The storage media 100 additionally stores the threshold value regarding the importance of the file, and backs up the file by outputting the file in which the importance of the file exceeds the threshold value to the storage apparatus 300.

[Sixth Embodiment]

In this embodiment, the same function as the storage 300 is given to the home server 440, and the remaining configuration is the same as the first embodiment described above. Here, the storage media 100 and the information processing apparatus 200 are connected to the same local network, and the storage media 100 will perform, as with the storage apparatus 300, the read processing (S720) and the write processing (S830) to the home server 300.

## Claims

1. An information storage system, comprising:
a storage media for storing information; and
a storage apparatus for storing information corresponding to the information stored in the storage media;
wherein the storage media and the storage apparatus authenticate each other via a network; and
wherein the storage media executes the sending and receiving of information to and from the storage apparatus as the access target on the condition that the two-way authentication is successful.

2. An information storage system, comprising:
a storage media for storing information;
a storage apparatus for storing information corresponding to the information stored in the storage media; and
an information processing apparatus connected to the storage media with the storage media as an internal storage area, and connected to the storage apparatus via a network with the storage apparatus as an external storage area;
wherein the storage media and the storage apparatus authenticate each other via the information processing apparatus; and
wherein the information processing apparatus executes the sending and receiving of information to and from the storage media and the storage apparatus as the access targets on the condition that the two-way authentication between the storage media and the storage apparatus is successful.

3. An information storage system, comprising:
a storage media for storing a file;
a storage apparatus for storing a file corresponding to the file stored in the storage media; and
an information processing apparatus connected to the storage apparatus via a network;
wherein the information processing apparatus accesses the storage media and reads a designated file from the storage media when the file exists in the storage media, and accesses the storage apparatus based on access information including authentication information when the designated file does not exist in the storage media; and
wherein, in response to the access from the information processing apparatus, the storage apparatus reads the designated file from the storage area and transfers the designated file to the information processing apparatus on the condition that the authentication information contained in the access information and the authentication information existing in the storage apparatus coincide.

4. The information storage system according to claim 3,
wherein the storage media stores storage location information and access information of the file; and
wherein, in response to the access from the information processing apparatus, the storage apparatus determines the accessibility to a storage area corresponding to the storage media based on authentication information contained in the access information, and reads the designated file from the storage area and transfers the designated file to the information processing apparatus on the condition that a positive result is obtained in the determination.

5. The information storage system according to claim 3,
wherein the storage media stores storage location information and access information of the file; and
wherein the information processing apparatus accesses the storage media based on file information containing a file name and a file size, writes a designated file into the storage media if an unused area exists in the storage media, and accesses the storage apparatus based on the access information including authentication information if an unused area does not exist in the storage media; and
wherein, in response to the access from the information processing apparatus, the storage apparatus writes the designated file into the storage area on the condition that the authentication information contained in the access information and the authentication information existing in the storage apparatus coincide.

6. The information storage system according to claim 3,
wherein the storage media stores storage location information and access information of the file; and
wherein, in response to the access from the information processing apparatus, the storage apparatus determines the accessibility to a storage area corresponding to the storage media based on authentication information contained in the access information, and writes the designated file into the storage area on the condition that a positive result is obtained in the determination.

7. The information storage system according to claim 3,
wherein the storage media sends the stored file to the storage apparatus on the condition of two-way authentication with the storage apparatus, stores information of the file in a file management table, and stores information concerning the received file in the file management table upon receiving the file from the storage apparatus.

8. The information storage system according to any one of claims 3 to 7,
wherein the storage media is mounted detachably on the information processing apparatus.

9. The information storage system according to claim 3,
wherein the storage media comprises an authentication mechanism for executing two-way authentication with the storage apparatus; and
wherein the authentication mechanism includes:
a mechanism for performing two-way authentication using public key infrastructure technology;
a mechanism for storing a digital certificate of a certificate authority and a digital certificate of a storage media issued by the certificate authority;
a mechanism for confirming whether the input digital certificate is a legitimate digital certificate issued by the certificate authority; and
a mechanism for outputting a digital certificate of a storage media issued by the certificate authority in order to certify the adequacy of the storage media.

10. The information storage system according to claim 3,
wherein the storage apparatus comprises an authentication mechanism for executing two-way authentication with the storage media; and
wherein the authentication mechanism includes:
a mechanism for performing two-way authentication using public key infrastructure technology;
a mechanism for storing a digital certificate of a certificate authority and a digital certificate of a storage media issued by the certificate authority;
a mechanism for confirming whether the input digital certificate is a legitimate digital certificate issued by the certificate authority; and
a mechanism for outputting a digital certificate of a storage media issued by the certificate authority in order to certify the adequacy of the storage apparatus.

11. The information storage system according to claim 3,
wherein the storage apparatus receives a file from the storage media, stores information of the received file in a storage unit, and sends a file name of the stored file to the storage media on the condition of two-way authentication with the storage media.

12. The information storage system according to claim 3,
wherein, upon receiving a file send request designated with a file name from the storage media, the storage apparatus reads information of the file from a storage unit and sends the information of the file to the storage media on the condition of two-way authentication with the storage media.

13. The information storage system according to claim 3,
wherein, upon deleting or overwriting a file stored in the storage media, the information processing apparatus reads the file from the storage media and transfers the file to the storage apparatus; and
wherein, upon receiving the file from the information processing apparatus, the storage apparatus stores a file name of the file and the time that the file was received.

14. The information storage system according to claim 3,
wherein the storage apparatus stores advertisement information and, upon receiving a file read request from the information processing apparatus and outputting the file to the information processing apparatus, adds the advertisement information to the file upon outputting the file.

15. The information storage system according to claim 3,
wherein, when a file name of a file stored in the storage unit is designated, the storage apparatus outputs a list of the times that the file name of the file was stored, and outputs a file name of the file designated by the information processing apparatus and a file of the stored time; and
wherein the information processing apparatus acquires a designated file from the storage apparatus, and stores the acquired file in the storage media.
